# EUROPEAN PATENT SPECIFICATION

(11) **EP 2 377 226 B1**
(45) Date of publication and mention of the grant of the patent: **10.10.2012**
(21) Application number: 09807543.5
(22) Date of filing: 01.12.2009
(51) Int. Cl.: H02J 3/38, H02M 7/48

(54) **FUEL CELL DEVICE AND METHOD FOR FEEDING ELECTRICAL CURRENT TO ELECTRICAL NETWORK**
BRENNSTOFFZELLENANORDNUNG UND VERFAHREN ZUM LEITEN VON ELEKTRISCHEM STROM INS ELEKTRISCHE NETZ
DISPOSITIF DE PILE À COMBUSTIBLE ET PROCÉDÉ D'ALIMENTATION D UN RÉSEAU ÉLECTRIQUE EN COURANT ÉLECTRIQUE

(30) Priority: 09.12.2008 FI 20086181
(43) Date of publication of application: 19.10.2011
(73) Proprietor: Wärtsilä Finland Oy, 65380 Vaasa (FI)
(72) Inventor: ÅSTRÖM, Kim, FI-02400 Kirkkonummi (FI)
(74) Representative: Ollikainen, Rauno Johannes
(86) International application number: PCT/FI2009/050968
(87) International publication number: WO 2010/066945

(56) References cited:
- HAIMIN TAO ET AL: "Line-Interactive UPS Using a Fuel Cell as the Primary Source" IEEE TRANSACTIONS ON INDUSTRIAL ELECTRONICS, IEEE SERVICE CENTER, PISCATAWAY, NJ, USA LNKD- DOI:10.1109/TIE.2008.918472, vol. 55, no. 8, 1 August 2008 (2008-08-01) , pages 3012-3021, XP011225182 ISSN: 0278-0046
- SANGMIN JUNG ET AL: "A Low Cost Utility Interactive Inverter for Residential Fuel Cell Generation" IEEE TRANSACTIONS ON POWER ELECTRONICS, IEEE SERVICE CENTER, PISCATAWAY, NJ, US LNKD- DOI:10.1109/TPEL.2007.909191, vol. 22, no. 6, 1 November 2007 (2007-11-01), pages 2293-2298, XP011196141 ISSN: 0885-8993
- GUOQIAO SHEN ET AL: "Instantaneous Voltage Regulated Seamless Transfer Control Strategy for Utility-interconnected Fuel cell Inverters with an LCL-filter" CONFERENCE PROCEEDINGS. IPEMC 2006. CES/IEEE 5TH INTERNATIONAL POWER ELECTRONICS AND MOTION CONTROL CONFERENCE 14-16 AUG. 2006 SHANGHAI, CHINA, CONFERENCE PROCEEDINGS. IPEMC 2006. CES/IEEE 5TH INTERNATIONAL POWER ELECTRONICS AND MOTION CONTROL CONFER, 14 August 2006 (2006-08-14), pages 1-5, XP031421488 ISBN: 978-1-4244-0448-3

## Description

### The field of the invention

Fuel cell devices are becoming general in fulfilling different kind of electricity production needs. Fuel cell devices are electrochemical devices supplied with reactants for producing electrical energy.

### The state of the art

Fuel cell devices are electrochemical devices, which enables production of electricity with high duty ratio in an environmentally friendly process. Fuel cell technology is considered as one of the most promising future energy production methods.

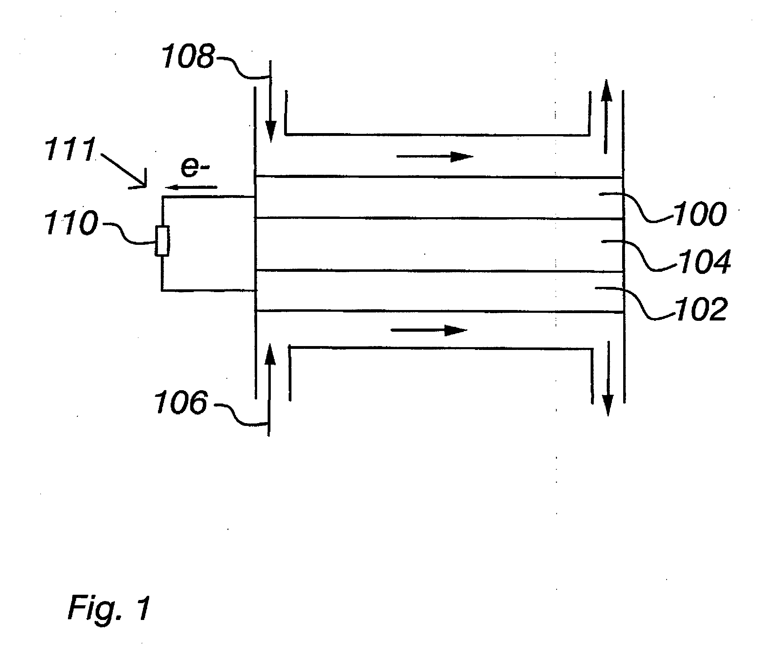

Fuel cell, as presented in fig 1, comprises an anode side 100 and a cathode side 102 and an electrolyte material 104 between them. The reactants fed to the fuel cell devices undergo a process in which electrical energy and heat are produced as a result of an exothermal reaction.

In solid oxide fuel cells (SOFCs) oxygen 106 is fed to the cathode side 102 and it is reduced to a negative oxygen ion by receiving electrons from the cathode. The negative oxygen ion goes through the electrolyte material 104 to the anode side 100 where it reacts with the used fuel 108 producing water and also typically carbondioxide (CO2). Between anode and cathode is an external electric circuit 111 for transferring electrons e- to the cathode. External electric circuit comprises a load 110.

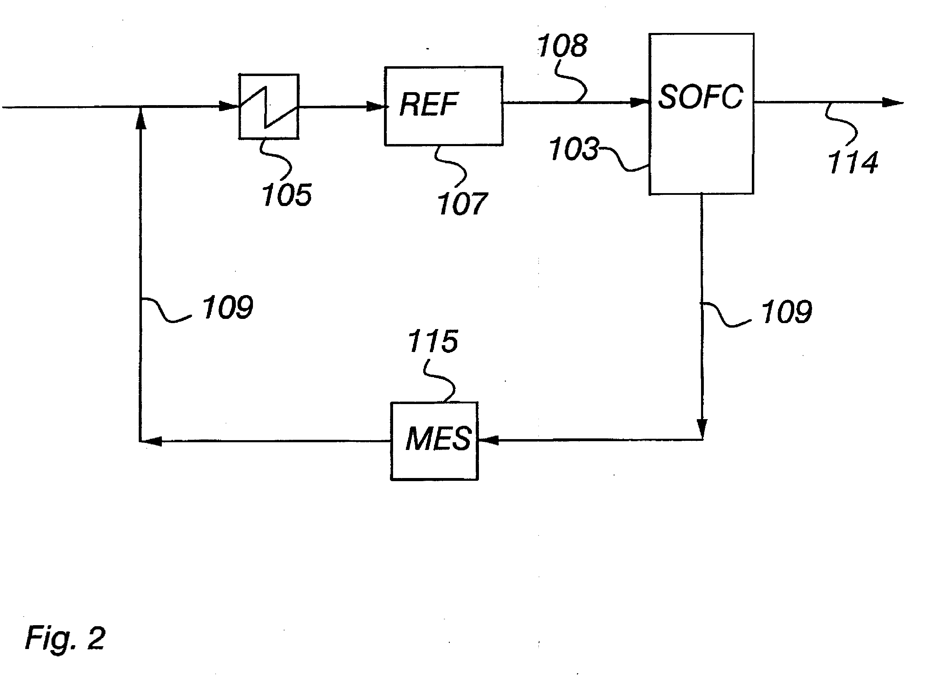

In figure 2 is presented a SOFC device, which can utilize as fuel for example natural gas, bio gas, methanol or other compounds containing hydrocarbons. SOFC device in figure 2 comprises planar-like fuel cells in stack formation 103 (SOFC stack). Each fuel cell comprises anode 100 and cathode 102 structure as presented in figure 1. Part of the used fuel is recirculated in feedback arrangement 109 through each anode.

SOFC device in fig 2 comprises a fuel heat exchanger 105 and a reformer 107. Heat exchangers are used for controlling thermal conditions in fuel cell process and there can be located more than one of them in different locations of SOFC device. The extra thermal energy in circulating gas is recovered in the heat exchanger 105 to be utilized in SOFC device or outside in a heat recovering unit. The heat recovering heat exchanger can thus locate in different locations as presented in figure 2. Reformer is a device that converts the fuel such as for example natural gas to a composition suitable for fuel cells, for example to a composition containing half hydrogen and other half methane, carbondioxide and inert gases. The reformer is not, however, necessary in all fuel cell implementations, but untreated fuel may also be fed directly to the fuel cells 103.

By using measurement means 115 (such as fuel flow meter, current meter and temperature meter) is carried out necessary measurements for the operation of the SOFC device from the through anode recirculating gas. Only part of the gas used at anodes 100 (figure 1) of the fuel cells 103 is recirculated through anodes in feedback arrangement 109 and thus in figure 2 is presented diagrammatically also as the other part of the gas is exhausted 114 from the anodes 100.

Fuel cell device produces electrical energy in the form of direct current comprising low voltage level. The voltage level can be raised by combining several fuel cells or combinations of fuel cells to form a serial connection such as for example a stacked formation. Current-voltage characteristics of the fuel cells depend on for example reactant compositions, mass flow, temperature and pressure. Electrochemical reactions in the fuel cell react quickly to fluctuations in the fuel cell load. However, the response capacity of reactants input system is typically much slower, meaning response times of seconds or even minutes. When trying to obtain more efficiency out of fuel cells than the prevailing input of reactants allows, is caused a weakening of fuel cell voltages, and even an irreversible deterioration of fuel cells is possible. In addition, load changes cause rapid temperature changes in the fuel cell, which especially in high temperature fuel cells cause harmful thermomechanical stress, resulting in significant reduction of performance and life time of fuel cells. Thus, fuel cell systems must be designed so that the load of each fuel cell is kept as constant as possible and a possible change in the load is tried to be carried out as controllable as possible.

The article "Line-interactive UPS using a fuel cell as the primary power source " by Tao et al. in IEEE Transactions on Power Electronics, 8 August 2008, discloses a fuel cell device according to the preamble of claim 1.

When the fuel cells are used to obtain independent variable AC loads, or to supply power to a distribution network, a DC-AC converter is needed to convert DC power to AC power. There may also be a need for DC-DC converters to raise DC voltage obtained from the fuel cells to a level which is suitable for DC-AC converter. However, due to the highly limited compatibility and capacity of the fuel cells to respond to changes in load, prior art fuel cell implementations, especially high temperature fuel cell implementations, apply badly as power sources to feed independent variable AC loads or to feed variable power to the distribution network. A well-known way to try to fix said problem is the use of an energy buffer, which consists for example of lead acid batteries. The function of energy buffer is to feed or consume power in rapidly changing conditions so that the load variation of fuel cell would be controlled. Especially in large fuel cell systems, disadvantages of said prior art implementation become more serious due to its high cost, large size and heavy weight and limited effectiveness. In electrical network coupled applications, an alternative prior art implementation to maintain a constant fuel cell load is to use a current controlled transform in feeding power to the network. The control based on current controlled transform is though not suitable in network independent operation, and thus it can not be used as emergency power source for critical AC loads inside or outside the fuel cell system.

High temperature fuel cell systems require a major heat energy amount for heating systems up to operating temperatures. From this follows that start-up times can be up to tens of hours in length. Wide temperature alternations in shut down and start up sequences expose the fuel cells and related system components to even excessive thermomechanical stress. Thus, the high-temperature fuel cell systems must be designed to operate continuously for as long time periods as possible, for even thousands of hours, without any shut downs. To achieve this objective the system must be designed to fulfil high reliability as well as to minimize such external factors, which might shut down the system or might drive the system to harmful operation conditions. Current controlled converters have in fuel cell applications as problem that they are unable to protect the fuel cells from sudden changes in load, arising from different network disruptions such as power failures, voltage dips or transients.

### Short description of the invention

The invention refers to a fuel cell device according to claim 1 and to a method for producing electrical current according to claim 7.

The object of the invention is to accomplish a fuel cell device without a separate storage arrangement for electrical energy, and said fuel cell device feeds a good quality electrical current to electrical network, and when a malfunction occurs in the electrical network the fuel cell device changes immediately to switched off operation mode from electrical network to be utilized for other functions. This is achieved by a fuel cell device for producing electrical current to electrical network. At least one fuel cell device has been arranged to be parallel connected to electrical network, and comprises a power transformer comprising a control circuit and a current controlled power stage to input electrical current to electrical network, when the fuel cell device has been parallel connected to electrical network, and said control circuit for forming a phase reference signal to be utilized in the inputting of the electrical current, a controllable load for maintaining a power stability of the fuel cell device, means for switching the fuel cell device off from electrical network when a malfunction occurs in electrical network, said power transformer to change the fuel cell device by using the phase reference signal to switched off operation mode from electrical network for performing voltage controlled operation of the power transformer, and said controllable load for maintaining the power stability between the voltage controlled power transformer and other parts of the fuel cell device, and, when the malfunction has vanished from electrical network, said power transformer to change the fuel cell device by using the phase reference signal to switched on operation mode to electrical network for performing current controlled operation of the power transformer.

The focus of the invention is also a method for producing electrical current by a fuel cell device, which inputs electrical current to electrical network. In the method at least one fuel cell device is arranged to be parallel connected to electrical network, is formed a phase reference signal to be utilized in the inputting of the electrical current, electrical current is inputted to electrical network current controlled by means of a power transformer comprising a power stage, when the fuel cell device has been parallel connected to electrical network, the fuel cell device is switched off from electrical network when a malfunction occurs in electrical network, the fuel cell device is changed by using the phase reference signal to switched off operation mode from electrical network for performing voltage controlled operation of the power transformer, and a controllable load is used for maintaining a power stability between the voltage controlled power transformer and other parts of the fuel cell device, and, when the malfunction has vanished from electrical network, the fuel cell device is changed by using the phase reference signal to switched on operation mode to electrical network for performing current controlled operation of the power transformer.

The invention is based on that current controlled power transform topology is utilized in the operation of the fuel cell device, and the phase reference signal is utilized in inputting electrical current to electrical network. When a malfunction occurs in the electrical network the fuel cell device is switched off immediately from the electrical network by using means for performing the switch off, and by utilizing the phase reference signal and the controllable load, the fuel cell device is changed to switched off operation mode from electrical network where part of the fuel cell device according to the invention operates voltage controllably, and by using the controllable load the power imbalance is balanced.

The advantage of the invention is the success in the implementation of fuel cell device, which ensures a steady fuel cell load in different situations without a need for an expensive and separate electrical energy storage arrangement. In the embodiment according to the invention the operation mode of fuel cell device is changed, from the operation mode in which the fuel cell device is parallel connected to electrical network to the operation mode in which the fuel cell device is switched off from the electrical network, immediately when a malfunction is detected in electrical network. Thus, the fuel cell device can continue to operate during a short term or long term malfunction of the electrical network. By this the long term start up processes of fuel cell devices are neglected, and during the malfunction of electrical network, the operation of fuel cell device can be utilized to some other purpose such as to operate as an emergency power source for example to a base station 132 of mobile phone network. After the malfunction of the electrical network has dismissed, the operation of fuel cell device can be reversed immediately to the operation mode switched on to electrical network, in which the fuel cell device feeds current to electrical network.

### Short description of figures

- Figure 1: presents a single fuel cell structure.
- Figure 2: presents an example of a fuel cell device.
- Figure 3: presents a preferred embodiment according to the present invention.

### Detailed description of the invention

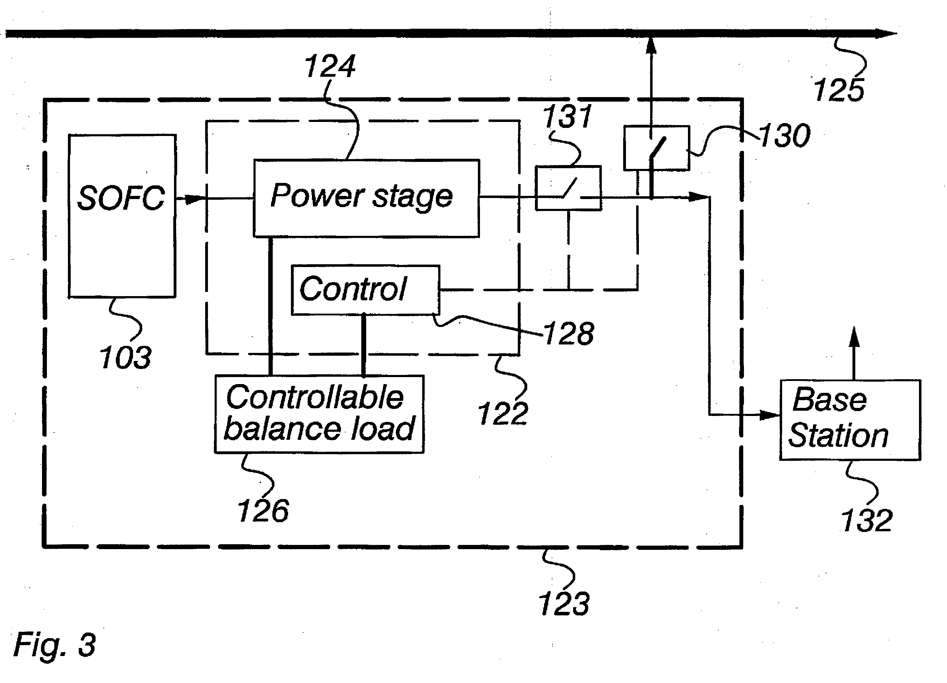

In embodiments according to the invention, fuel cell technology is successfully utilized in feeding current to electrical network 125, and also in cases, in which a fuel cell device 123 is switched off from electrical network to perform unconnected operation. In the following description is presented in detail a preferred embodiment of the invention, of which figure 3 shows a block diagram. At least one fuel cell device is arranged to be parallel connected to electrical network for feeding to electrical network electricity produced by the fuel cell device. A power transformer 122 of the fuel cell device comprises a control circuit 128 and a current controlled power stage 124 to input electrical current to electrical network, when the fuel cell device 123 has been parallel connected to electrical network. Power transform topology is implemented by utilizing current controlled converters, which said power stage comprises, for example by utilizing current controlled DC-DC converters. Said current controlled embodiment enables that the fuel cell is kept within wanted operation ranges, even with voltage of fuel cell varies or intermediate circuit voltage of DC-AC converter varies. In fuel cell systems comprising a number of fuel cell stacks, can be used separate DC-DC converters for each stack or group of stacks to ensure controllability of division of loads between the fuel cell stacks.

In the switched on operation mode of the fuel cell device 123 to electrical network 125, current produced by the fuel cell device is feed to the electrical network by a three phase current controlled power stage 122. A power transformer 122 comprises a control circuit 128 for forming a phase reference signal to input electrical current to electrical network. The phase reference signal is formed for example so that a three phase sinusoidal reference signal in the control circuit 128 for phase currents is kept essentially constant. Said phase reference signal, ie the sine wave reference signal is formed by the control circuit frequency locked in three phase as compared to three phase mains voltage. By applying an offset value to the sine wave reference signal a phase angle of the current to be fed to electrical network can in certain limits be freely set as having delay or as being ahead of time. Also amplitude control is performed by the control circuit 128 so that the phase reference signal, ie in this example the sine wave reference signal is multiplied with an amplitude reference signal, which is derived from intermediate circuit voltage of the power stage 124. In this way, the amplitude control can be carried out in such a minimum level, which is sufficient to allow an undistorted current feed-in to electrical network, thus optimizing efficiency of the fuel cell device.

In the preferred embodiment of the invention is arranged as means for switching the fuel cell device off from electrical network a protective relay arrangement 130 for switching the fuel cell device to an operation mode off from electrical network immediately when a malfunction occurs in electrical network. The malfunction in electrical network is detected for example on the basis of voltage or frequency detection. Said switch-off is signalled by a transmitter to the control circuit 128 of the power transformer 122, and by using the control circuit based on internal sine wave reference signal of the control circuit, operation of the fuel cell device is transferred immediately to the switched off operation mode from electrical network. In the switched off operation mode from electrical network, the fuel cell device 123 operates in voltage controlled operation mode, in which is formed a stable load independent three phase voltage. The protection relay 130 can be configured by using a transmitter-receiver arrangement to communicate with other protective relays 131, which the fuel cell device comprises, so that the fuel cell device forms a local isolated unit comprising loads 132 (for example, the mobile phone network base station), for which the fuel cell device can operate as an emergency power source, when a need arises. Sharing of the loads with possible other voltage units of the unit can be performed for example by applying a negative feedback between power supply and frequency. The protective relay 131 presented in figure 3 is not necessary in implementation of the invention.

In the switched off operation mode from electrical network, fuel cells of the fuel cell device 123 are kept in constant load conditions by utilizing a controllable load for maintaining power stability, ie so called buffer load, whose loading is adapted to eliminate a difference, which is based on difference between electrical power produced from fuel cells and present actual electrical power need of loads. After switching off from electrical network a power transformer 122, which is in one preferred embodiment of the invention presented here a DC/AC transformer, has to operate in voltage controlled operation mode, although loading of the fuel cells 103 continues as current controllable. A controllable load 126 is used to balance the power imbalances caused by said voltage and current controls. Adapting of the controllable load 126 is accomplished by a control arrangement based on present intermediate circuit voltage values of the power stage. As means for controlling can be used for example a tyristor controller, whose trigging angle is controlled. The electrical power amount, which is feed to the controllable load 126, represents also a marginal for increasing present electrical power feed to the loads. Electric energy storage is needed only if the fuel cell device is intended for a longer period to feed AC power more than its nominal operating power produces.

Said malfunction of electrical network 125 may vary depending on duration of very short-term (eg. voltage spike) for long-term (blackouts). When respectively detected that malfunction has dismissed from electrical network, operation of the fuel cell device 123 can also be returned immediately to a switched on electrical network operation mode, where the fuel cell device feeds current to electrical network. The preferred embodiment of the invention can thus also be appointed as network interactive electrical power balancer for fuel cell device applications connectable to different kind of electrical networks. Electrical network can therefore be a single-phase, two-phase, three-phase, and so on, alternating current network and also DC power networks can be relevant.

For fuel cell devices, which are primarily intended for operation parallel to electrical network, such as for example divisional fuel cell systems, have a major advantage to have a possibility to operate without an arrangement to store electrical energy. In the switched on electrical network operation mode according to the invention, the absence of storage arrangement for electrical energy means efficiency benefit, because it is not necessary to produce separately electricity to maintain electrical energy amount of energy storage sufficiently high. In the switched off from electrical network operation mode according to the invention, power lost in resistors is meaningless, because time periods of said operation mode are relatively short. Although the electric energy storage would be involved in fuel cell device, the fuel cell device has to operate at a certain minimum load, so that requirement of temperature balance fulfils in the operation of fuel cell device. In the embodiment according to the invention minimum permissible load of the fuel cell can be reduced by setting a resistance load near the fuel cells and by utilizing thermal energy of the resistance load for heating fuel cells and/or when the fuel cell device operates as an emergency power source for an external load 132 such as for example for the mobile phone network base station.

Although above with figures is presented embodiments according to the invention to be utilized in SOFC fuel cell devices, it should be noted, that embodiments according to the invention can be utilized in different kinds of fuel cell devices. In the preferred embodiment of the invention electrical network is most often meant to be the common electrical power distribution network and DC electricity produced by the fuel cell device is fed to said network for example through a three phase DC-AC transform. In embodiments according to the invention can be realized many kind of electrical network applications, and thus for example DC-AC transform is not needed in every application.

Although the invention has been presented in reference to the attached figures and specification, the invention is by no means limited to those as the invention is subject to variations within the scope allowed for by the claims.

## Claims

1. A fuel cell device for producing electrical current to electrical network (125), which fuel cell device (123) has been arranged to be parallel connected to electrical network (125), the fuel cell device (123) comprising:
- a power transformer (122) comprising a control circuit (128) and a current controlled power stage (124) to input electrical current to electrical network, when the fuel cell device has been parallel connected to electrical network, and said control circuit (128) for forming a phase reference signal to be utilized in the inputting of the electrical current,
- means (130) for switching the fuel cell device off from electrical network when a malfunction occurs in electrical network and
- when the malfunction has vanished from electrical network, said power transformer (122) to change the fuel cell device by using the phase reference signal to switched on operation mode to electrical network for performing current controller operation of the power transformer (122), **characterized by**, that the fuel cell device (123) comprises:
- a controllable load (126) for maintaining a power stability of the fuel cell device,
- said power transformer (122) to change the fuel cell device by using the phase reference signal to switched off operation mode from electrical network for performing voltage controlled operation of the power transformer (122), and said controllable load (126) for maintaining the power stability between the voltage controlled power transformer (122) and other parts of the fuel cell devices.

2. A fuel cell device in accordance with claim 1, **characterized by**, that the fuel cell device (123) comprises the control circuit (128) for forming a three phase sinusoidal phase reference signal to input electrical current to electrical network.

3. A fuel cell device in accordance with claim 1, **characterized by**, that the fuel cell device (123) comprises the control circuit (128) for multiplying the phase reference signal with an amplitude reference signal to input nondistorted electrical current to electrical network to optimize efficiency of the fuel cell device.

4. A fuel cell device in accordance with claim 3, **characterized by**, that the current controlled power stage (124) comprises an intermediate circuit, and said amplitude reference signal is derived from voltage of the intermediate circuit.

5. A fuel cell device in accordance with claim 1, **characterized by**, that the fuel cell device (123) comprises the controllable load (126) for arranging the operation of the fuel cell device to an emergency power source operation in the operation mode, which is switched off from electrical network.

6. A fuel cell device in accordance with claim 1, **characterized by**, that the fuel cell device (123) comprises more than one fuel cell stacks (103), and a separate DC-DC converter for each fuel cell stack or for group of fuel cell stacks to control division of loads between the fuel cell stacks.

7. A method for producing electrical current by a fuel cell device, which inputs electrical current to electrical network (125), and in the method at least one fuel cell device (123) is arranged to be parallel connected to electrical network (125), electrical current is inputted to electrical network current controlled by means of a power transformer (122) comprising a power stage (122), when the fuel cell device has been parallel connected to electrical network, and the fuel cell device is switched off from electrical network when a malfunction occurs in electrical network, wherein in the method:
- is formed a phase reference signal to be utilized in the inputting of the electrical current to electrical network,
- the fuel cell device is changed by using the phase reference signal to switched off operation mode from electrical network for performing voltage controlled operation of the power transformer (122), and a controllable load (126) is used for maintaining a power stability between the voltage controlled power transformer (122) and other parts of the fuel cell device, and,
- when the malfunction has vanished from electrical network, the fuel cell device is changed by using the phase reference signal to switched on operation mode to electrical network for performing current controlled operation of the power transformer (122).

8. A method in accordance with claim 7, **characterized by**, that a three phase sinusoidal phase reference signal is formed to input electrical current to electrical network.

9. A method in accordance with claim 7, **characterized by**, that the phase reference signal is multiplied with an amplitude reference signal to input nondistorted electrical current to electrical network to optimize efficiency of the fuel cell device (123).

10. A method in accordance with claim 9, **characterized by**, that the amplitude reference signal is derived from voltage of an intermediate circuit of the power stage (124).

11. A method in accordance with claim 7, **characterized by**, that by using a controllable load (126) the operation of the fuel cell device is arranged to an emergency power source operation in the operation mode, which is switched off from electrical network.

12. A method in accordance with claim 1, **characterized by**, that by using separate DC-DC converters for fuel cell stacks (103), or for groups of fuel cell stacks, is controlled division of loads between the fuel cell stacks or division of loads between the groups of fuel cell stacks.

## Patentansprüche

1. Brennstoffzellenanordnung zum Erzeugen von elektrischem Strom für ein elektrisches Netz (125), wobei die Brennstoffzellenanordnung (123) so angeordnet wurde, dass sie zum elektrischen Netz (125) parallel geschaltet ist, und wobei die Brennstoffzellenanordnung (123) umfasst:
- einen Leistungstransformator (122), der eine Steuerschaltung (128) und eine stromgesteuerte Leistungsstufe (124) zum Eingeben von elektrischem Strom in ein elektrisches Netz umfasst, wenn die Brennstoffzellenanordnung zum elektrischen Netz parallel geschaltet wurde, und die Steuerschaltung (128) zum Erzeugen eines Phasenreferenzsignals, das beim Eingeben des elektrischen Stroms verwendet werden soll,
- Mittel (130) zum Trennen der Brennstoffzellenanordnung vom elektrischen Netz bei Auftreten einer Störung im elektrischen Netz und,
- wenn die Störung aus dem elektrischen Netz verschwunden ist, der Leistungstransformator (122) zum Umschalten der Brennstoffzellenanordnung durch Verwenden des Phasenreferenzsignals in einen mit dem elektrischen Netz verbundenen Betriebsmodus zum Durchführen eines stromgesteuerten Betriebs des Leistungstransformators (122),
**dadurch gekennzeichnet, dass** die Brennstoffzellenanordnung (123) umfasst:
- eine steuerbare Last (126) zum Aufrechterhalten einer Leistungsstabilität der Brennstoffzellenanordnung,
- wobei der Leistungstransformator (122) zum Umschalten der Brennstoffzellenanordnung durch Verwenden des Phasenreferenzsignals in einen vom elektrischen Netz getrennten Betriebsmodus zum Durchführen eines spannungsgesteuerten Betriebs des Leistungstransformators (122), und die steuerbare Last (126) zum Aufrechterhalten der Leistungsstabilität zwischen dem spannungsgesteuerten Leistungstransformator (122) und anderen Teilen der Brennstoffzellenanordnung.

2. Brennstoffzellenanordnung nach Anspruch 1, **dadurch gekennzeichnet, dass** die Brennstoffzellenanordnung (123) die Steuerschaltung (128) zum Erzeugen eines dreiphasigen sinusförmigen Phasenreferenzsignals zum Eingeben von elektrischem Strom in das elektrische Netz umfasst.

3. Brennstoffzellenanordnung nach Anspruch 1, **dadurch gekennzeichnet, dass** die Brennstoffzellenanordnung (123) die Steuerschaltung (128) zum Multiplizieren des Phasenreferenzsignals mit einem Amplitudenreferenzsignal zum Eingeben von verzerrungsfreiem elektrischem Strom in das elektrische Netz umfasst, um den Wirkungsgrad der Brennstoffzellenanordnung zu optimieren.

4. Brennstoffzellenanordnung nach Anspruch 3, **dadurch gekennzeichnet, dass** die stromgesteuerte Leistungsstufe (124) eine Zwischenschaltung umfasst, und das Amplitudenreferenzsignal von der Spannung der Zwischenschaltung abgeleitet ist.

5. Brennstoffzellenanordnung nach Anspruch 1, **dadurch gekennzeichnet, dass** die Brennstoffzellenanordnung (123) die steuerbare Last (126) zum Versetzen des Betriebs der Brennstoffzellenanordnung in einen Notleistungsquellenbetrieb im Betriebsmodus umfasst, welcher vom elektrischen Netz getrennt ist.

6. Brennstoffzellenanordnung nach Anspruch 1, **dadurch gekennzeichnet, dass** die Brennstoffzellenanordnung (123) mehr als einen Brennstoffstapel (103) und einen getrennten GS-GS-Umformer für jeden Brennstoffzellenstapel oder für eine Gruppe von Brennstoffzellenstapeln umfasst, um eine Teilung von Lasten zwischen den Brennstoffzellenstapeln zu steuern.

7. Verfahren zur Erzeugung von elektrischem Strom durch eine Brennstoffzellenanordnung, welche elektrischen Strom in ein elektrisches Netz (125) eingibt, wobei in dem Verfahren mindestens eine Brennstoffzellenanordnung (123) so angeordnet ist, dass sie zum elektrischen Netz (125) parallel geschaltet ist, elektrischer Strom in das elektrische Netz stromgesteuert durch einen Leistungstransformator (122) eingegeben wird, der eine Leistungsstufe (124) umfasst, wenn die Brennstoffzellenanordnung zum elektrischen Netz parallel geschaltet wurde, und die Brennstoffzellenanordnung bei Auftreten einer Störung im elektrischen Netz vom elektrischen Netz getrennt wird, wobei im Verfahren:
- ein Phasenreferenzsignal erzeugt wird, das beim Eingeben des elektrischen Stroms in das elektrische Netz verwendet werden soll,
- die Brennstoffzellenanordnung durch Verwenden des Phasenreferenzsignals in einen vom elektrischen Netz getrennten Betriebsmodus zum Durchführen eines spannungsgesteuerten Betriebs des Leistungstransformators (122) umgeschaltet wird, und eine steuerbare Last (126) zum Aufrechterhalten einer Leistungsstabilität zwischen dem spannungsgesteuerten Leistungstransformator (122) und anderen Teilen der Brennstoffzellenanordnung verwendet wird, und,
- wenn die Störung aus dem elektrischen Netz verschwunden ist, die Brennstoffzellenanordnung durch Verwenden des Phasenreferenzsignals in einen mit dem elektrischen Netz verbundenen Betriebsmodus zum Durchführen eines stromgesteuerten Betriebs des Leistungstransformators (122) umgeschaltet wird.

8. Verfahren nach Anspruch 7, **dadurch gekennzeichnet, dass** ein dreiphasiges sinusförmiges Phasenreferenzsignal zum Eingeben von elektrischem Strom in das elektrische Netz erzeugt wird.

9. Verfahren nach Anspruch 7, **dadurch gekennzeichnet, dass** das Phasenreferenzsignal mit einem Amplitudenreferenzsignal zum Eingeben von verzerrungsfreiem elektrischem Strom in das elektrische Netz multipliziert wird, um den Wirkungsgrad der Brennstoffzellenanordnung (123) zu optimieren.

10. Verfahren nach Anspruch 9, **dadurch gekennzeichnet, dass** das Amplitudenreferenzsignal von der Spannung einer Zwischenschaltung der Leistungsstufe (124) abgeleitet wird.

11. Verfahren nach Anspruch 7, **dadurch gekennzeichnet, dass** durch Verwenden einer steuerbaren Last (126) der Betrieb der Brennstoffzellenanordnung in einen Notleistungsquellenbetrieb im Betriebsmodus versetzt wird, welcher vom elektrischen Netz getrennt ist.

12. Verfahren nach Anspruch 7, **dadurch gekennzeichnet, dass** durch Verwenden von getrennten GS-GS-Umformern für Brennstoffzellenstapel (103) oder für Gruppen von Brennstoffzellenstapeln eine Teilung von Lasten zwischen den Brennstoffzellenstapeln oder eine Teilung von Lasten zwischen den Gruppen von Brennstoffzellenstapeln gesteuert wird.

## Revendications

1. Dispositif de pile à combustible pour produire un courant électrique pour un réseau électrique (125), le dispositif de pile à combustible (123) étant agencé pour être relié en parallèle au réseau électrique (125), le dispositif de pile à combustible (123) comprenant :
- un transformateur de puissance (122) comprenant un circuit de commande (128) et un étage de puissance régulée par l'intensité (124) pour entrer du courant électrique dans le réseau électrique, lorsque le dispositif de pile à combustible est relié en parallèle au réseau électrique, et ledit circuit de commande (128) formant un signal de référence de phase à utiliser dans l'entrée du courant électrique,
- un moyen (130) pour déconnecter le dispositif de pile à combustible du réseau électrique lorsqu'un dysfonctionnement se produit dans le réseau électrique, et
- lorsque le dysfonctionnement a disparu du réseau électrique, ledit transformateur de puissance (122) change le dispositif de pile à combustible en utilisant le signal de référence de phase pour activer un mode de fonctionnement du réseau électrique afin d'effectuer un fonctionnement régulé par l'intensité du transformateur de puissance (122),
**caractérisé en ce que** le dispositif de pile à combustible (123) comprend :
- une charge contrôlable (126) pour maintenir une stabilité de puissance du dispositif de pile à combustible,
- ledit transformateur de puissance (122) change le dispositif de pile à combustible en utilisant le signal de référence de phase pour désactiver le mode de fonctionnement du réseau électrique afin d'effectuer un fonctionnement régulé par la tension du transformateur de puissance (122), et ladite charge contrôlable (126) étant destinée à maintenir la stabilité de puissance entre le transformateur de puissance régulé par la tension (122) et les autres parties du dispositif de pile à combustible.

2. Dispositif de pile à combustible selon la revendication 1, **caractérisé en ce que** le dispositif de pile à combustible (123) comprend le circuit de commande (128) pour former un signal de référence de phase sinusoïdale triphasé pour entrer du courant électrique dans le réseau électrique.

3. Dispositif de pile à combustible selon la revendication 1, **caractérisé en ce que** le dispositif de pile à combustible (123) comprend le circuit de commande (128) pour multiplier le signal de référence de phase par un signal de référence d'amplitude pour entrer du courant électrique sans distorsion dans le réseau électrique afin d'optimiser le rendement du dispositif de pile à combustible.

4. Dispositif de pile à combustible selon la revendication 3, **caractérisé en ce que** l'étage de puissance régulée par l'intensité (124) comprend un circuit intermédiaire, et ledit signal de référence d'amplitude est dérivé de la tension du circuit intermédiaire.

5. Dispositif de pile à combustible selon la revendication 1, **caractérisé en ce que** le dispositif de pile à combustible (123) comprend la charge contrôlable (126) pour agencer le fonctionnement du dispositif de pile à combustible sur un fonctionnement de source de puissance d'urgence dans le mode de fonctionnement, qui est déconnecté du réseau électrique.

6. Dispositif de pile à combustible selon la revendication 1, **caractérisé en ce que** le dispositif de pile à combustible (123) comprend plusieurs empilements de piles à combustible (103), et un convertisseur de courant continu en courant continu distinct pour chaque empilement de piles à combustible ou pour chaque groupe d'empilements de piles à combustible afin de commander la répartition de charges entre les empilements de piles à combustible.

7. Procédé pour produire un courant électrique par un dispositif de pile à combustible, qui entre du courant électrique dans un réseau électrique (125), et dans le procédé au moins un dispositif de pile à combustible (123) est agencé pour être relié en parallèle au réseau électrique (125), le courant électrique est entré dans le réseau électrique en étant régulé par l'intensité au moyen d'un transformateur de puissance (122) comprenant un étage de puissance (124), lorsque le dispositif de pile à combustible est relié en parallèle au réseau électrique, et le dispositif de pile à combustible est déconnecté du réseau électrique lorsqu'un dysfonctionnement se produit dans le réseau électrique,dans lequel
- il est formé un signal de référence de phase à utiliser pour l'entrée du courant électrique dans le réseau électrique,
- le dispositif de pile à combustible est changé en utilisant le signal de référence de phase pour désactiver le mode de fonctionnement du réseau électrique afin d'effectuer un fonctionnement régulé par la tension du transformateur de puissance (122), et une charge contrôlable (126) est utilisée pour maintenir une stabilité de puissance entre le transformateur de puissance régulée par la tension (122) et les autres parties du dispositif de pile à combustible, et
- lorsque le dysfonctionnement a disparu du réseau électrique, le dispositif de pile à combustible est changé en utilisant le signal de référence de phase pour activer le mode de fonctionnement du réseau électrique afin d'effectuer un fonctionnement régulé par l'intensité du transformateur de puissance (122).

8. Procédé selon la revendication 7, **caractérisé en ce qu'**il est formé un signal de référence de phase sinusoïdale triphasé pour entrer du courant électrique dans le réseau électrique.

9. Procédé selon la revendication 7, caractérisé en ce quele signal de référence de phase est multiplié par un signal de référence d'amplitude pour entrer du courant électrique sans distorsion dans le réseau électrique afin d'optimiser le rendement du dispositif de pile à combustible (123).

10. Procédé selon la revendication 9, **caractérisé en ce que** le signal de référence d'amplitude est dérivé de la tension d'un circuit intermédiaire de l'étage de puissance (124).

11. Procédé selon la revendication 7, **caractérisé en ce que**, en utilisant une charge contrôlable (126), le fonctionnement du dispositif de pile à combustible est agencé sur un fonctionnement de source de puissance d'urgence dans le mode de fonctionnement, qui est déconnecté du réseau électrique.

12. Procédé selon la revendication 7, **caractérisé en ce que**, en utilisant des convertisseurs de courant continu en courant continu distincts pour des empilements de piles à combustible (103) ou des groupes d'empilements de piles à combustible, la répartition de charges entre les empilements de piles à combustible ou la répartition de charges entre les groupes d'empilements de piles à combustible est commandée.
